# EUROPEAN PATENT SPECIFICATION

(11) **EP 2 037 104 B1**
(45) Date of publication and mention of the grant of the patent: **08.09.2010**
(21) Application number: 07425566.2
(22) Date of filing: 13.09.2007
(51) Int. Cl.: F02D 41/00, F02D 41/04, F02D 41/14

(54) **Fuel volatility recognition method during the postcranking step of an internal combustion engine**
Kraftstoffvolatilitätserkennungsverfahren während des Nachstartschritts eines Verbrennungsmotors
Procédé de reconnaissance de la volatilité d'un carburant pendant l'étape de post-démarrage d'un moteur à combustion interne

(43) Date of publication of application: 18.03.2009
(73) Proprietor: Magneti Marelli S.p.A., Corbetta (MI) (IT)
(72) Inventor: Caterini, Canio Rocco, 85010 Cancellara (IT); Zanotti, Massimo, 40040 Vado (IT); Sala de Llobet, Carlo Enrico, 40134 Bologna (IT); Zecca, Luca, 40010 Sala Bolognese (IT); Lambertini, Loris, 40056 Crespellano (IT)
(74) Representative: Jorio, Paolo

(56) References cited:
- WO-A-2006/067204
- JP-A- 4 191 441
- JP-A- 4 194 348
- US-A1- 2003 213 475
- US-B1- 7 163 002

## Description

### TECHNICAL FIELD

The present invention relates to a fuel volatility recognition method during the post-cranking step of an internal combustion engine.

The present invention finds advantageous application in a gasoline-fed controlled ignition internal combustion engine (i.e. operating according to the Otto cycle) to which explicit reference will be made in following description hence without loosing in generality.

### BACKGROUND ART

Gasoline volatility is a value indicating the propensity of the gasoline itself to pass from the liquid state to the gassy state and is defined as the vapor tension which is measured when the gasoline is at a temperature of 37.8°C (balance state between liquid and vapor states). Therefore, gasoline volatility is dimensionally a pressure and is generally expressed in PSI ("Pound per Square Inch"); 1 PSI corresponds to 68.9 hPa.

Various qualities of gasoline presenting various degrees of volatility exist on the market. In this regard, it is worth noting that gasoline volatility is variable according to both the gasoline source refinery and the time of year; indeed, much less volatile gasoline is sold during the summertime than during the wintertime. When the ambient temperature is high, the cold cranking of the engines is however facilitated, while at the time of supply of the gasoline at a pump if the gasoline is particularly volatile and the outside temperature is high, a considerable amount of gasoline vapours, potentially toxic for the health of workers and for the environment, are developed. Gasoline having a volatility in the range between 6 and 14 PSI, i.e. between 413 and 965 hPa, may be found on the market.

In a modern gasoline-fed internal combustion engine, the gasoline is either injected into an intake pipe near the cylinders (indirect injection) or is injected into the cylinders (direct injection).

No significant differences of behaviour of the engine using gasoline with different volatility values is observed when the engine itself is hot, i.e. when the engine has reached a temperature close to the operative temperature. On the contrary, when the engine is cold and the external temperature is harsh (less than 10°C), the non-volatile parts of the gasoline remain liquid after injection and are not involved in the combustion; specifically, the non-volatile parts of the gasoline which remain liquid deposit on the intake manifold (in indirect injection engines) and on the walls of the cylinders were they are either diluted by the lubrication oil or expelled unburnt through the exhaust valves. In order to counterbalance the fact that only part of the injected gasoline participates in the combustion, it is necessary to increase the amount of injected gasoline, i.e. it is necessary to "enrich" the fuel injection.

The gasoline injection enrichment is metered according to the external temperature (the colder the temperature, the richer the injection), and according to the volatility of the gasoline (the less volatile the gasoline, the richer the injection). The object of the enrichment process is to provide the minimum enrichment sufficient to allow a good cranking of the engine, because all the further enrichment has the sole consequence of increasing consumptions and above all the pollution produced by the engine. Establishing an adequate gasoline injection enrichment is particularly complicated during the first instants of operation of the engine (indicatively for a few minutes after cranking) after cold cranking, because during this range of time the lambda sensor in the exhaust is not capable of operating due to the insufficient temperature of the exhaust system and thus the engine control must work with an open loop control strategy (i.e. without being able to use the feedback provided by the lambda sensor to verify whether the air-gasoline mixture which is injected into the cylinders is either too lean or too rich).

The external temperature datum is made available in modern internal combustion engines either by means of a direct measurement or by measuring the coolant temperature (when the engine is cold, the temperature of the coolant is essentially equal to external temperature). The gasoline volatility datum is instead available only by approximation because it is too expensive and complicated to install a sensor capable of performing a direct gasoline volatility measurement; in order to indirectly determine gasoline volatility, some recognition methods have been suggested (e.g. as described in patent application WO2006067204A1and JP-04 191 441), which work only during the cranking step (i.e. indicatively for 1 second after cranking the engine) and are sufficiently precise and reliable only if the cranking occurs when the engine coolant temperature not higher than 10°C.

Consequently, gasoline volatility cannot be currently estimated if the engine is cranked when the coolant temperature higher than 10°C but lower than the operative temperature; consequently, if the gasoline volatility is significantly different from expectations (i.e. from the gasoline volatility determined in the recent past), the fuel enrichment based on the estimated gasoline volatility is wrong and thus in the case of insufficient enrichment (excessively lean mixture) the idling engine presents a very irregular revolution speed and go out when pulling away.

It is worth noting that the above-described change of the gasoline volatility with a "warm" engine (i.e. with the engine coolant temperature higher than 10°C but lower than running temperature) is relatively frequent, because it may potentially occur whenever refueling with a different type of gasoline from that previously used when the engine is "warm".

Experimental tests have demonstrated that in the case of change of the fuel volatility (i.e. in case of refueling with a different type of gasoline from that previously used) with a "warm" engine, the mixture titre is very lean approaching lambda values of 1.3 while during the open loop control is the expected target lambda is typically 0.94-0.95.

### DISCLOSURE OF INVENTION

It is the object of the present invention to provide a fuel volatility recognition method during the post-cranking step of an internal combustion engine, such a control method being free from the above-described drawbacks, and specifically, being easy and cost-effective to implement.

According to the present invention, there is provided a fuel volatility recognition method during the post-cranking step of an internal combustion engine as claimed in the attached claims.

### BRIEF DESCRIPTION OF THE DRAWINGS

The present invention will now be described with reference to the accompanying drawings, which illustrate a non-limitative embodiment thereof, in which:
- figure 1 is a diagrammatic view of an internal combustion engine provided with a control unit which implements the fuel volatility recognition method the object of the present invention; and
- figures 2-6 are charts which illustrate the time evolution of some physical magnitudes of the internal combustion engine in figure 1 during the post-cranking step.

### PREFERRED EMBODIMENTS OF THE INVENTION

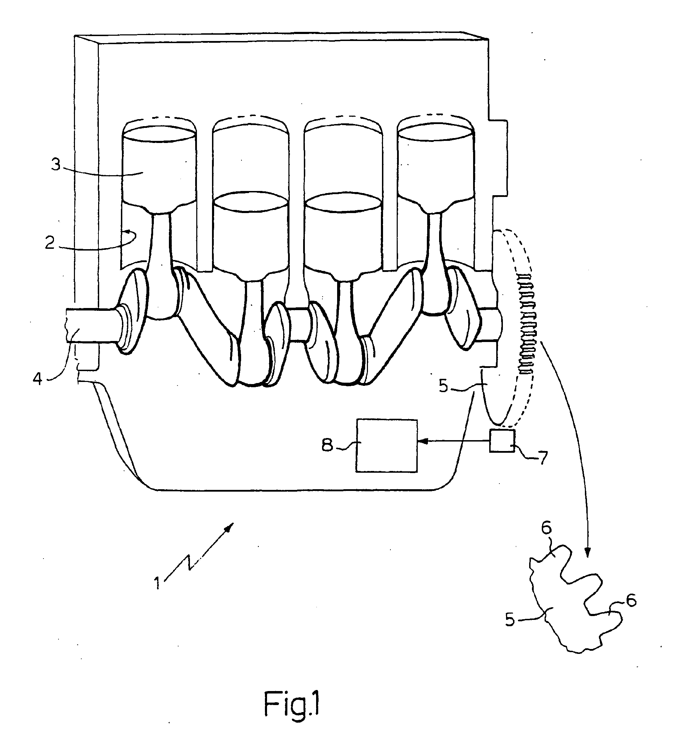

In figure 1, numeral 1 indicates as a whole a gasoline-fed controlled ignition internal combustion engine (i.e. operating according to the Otto cycle) mounted aboard a road vehicle (not shown) which is provided with a drive line (not shown) for transmitting the torque generated by the internal combustion engine 1 to the ground. The internal combustion engine 1 comprises four cylinders 2, each of which is coupled to a corresponding spark plug (not shown) and accommodates a corresponding piston 3 mechanically connected by means of a connecting rod to a crankshaft 4 for transmitting the force generated by the combustion inside the cylinder 2 to the crankshaft 4 itself.

A phonic wheel 5 which is provided with a number N (e.g. 60) of teeth 6 is keyed onto the crankshaft 4 and is coupled with a sensor 7, which is adapted to detect the time elapsing between the passage of two consecutive teeth 6. The teeth 6 of the phonic wheel 5 are equally spaced apart except for one pair of teeth 6 which are reciprocally arranged at a greater distance than the others to constitute a singularity which allows to accurately identify each tooth 6 and thus the angular position of the phonic wheel 5. (i.e. of the crankshaft 4). The internal combustion engine 1 further comprises an electronic control unit 8, which is connected to the sensor 7 and is adapted to recognize the gasoline quality (i.e. the volatility of the gasoline itself) both during the cranking step (indicatively within one second after cranking), and during the post-cranking step (indicatively within 5-10 seconds after cranking).

Once the engine control unit 8 has received the command to crank the internal combustion engine 1 from the driver, the electronic control unit 8 starts rotating the crankshaft 4 by means of an electric starter motor (not shown) and at the same time starts injecting gasoline into the cylinders 2 and operating the spark plugs (not shown).

A previously determined historic gasoline volatility value is stored in the electronic control unit 8 and for adjusting the gasoline injection (and specifically for establishing the necessary degree of enrichment) the electronic control unit 8 uses such historic gasoline volatility value during the first instants after cranking; it is worth underlining that in case of cold cranking of the internal combustion engine 1, the gasoline must be enriched so that the mixture which burns in the cylinders has an air/gasoline ratio λ lower than the stoichiometric ratio (i.e. lower than 1). In other words, during cranking, the electronic control unit 8 adjusts the enrichment of the mixture burnt in the cylinders 2 of the internal combustion engine 1 according to the previously determined historic gasoline volatility value, according to the external temperature and/or according to the coolant temperature of the internal combustion engine 1.

During the cranking step (approximately within one second after cranking), the electronic control unit 8 attempts to recognize the real gasoline volatility value by means of a know recognition method (e.g. as described in patent application WO2006067204A1) in order to use the real gasoline volatility value instead of the previously determined historic gasoline volatility value for adjusting the gasoline injection; however, in some conditions, the known recognition method used by the electronic control unit 8 to attempt to recognize the real gasoline volatility value may not provide a reliable result (typically when the coolant temperature of the internal combustion engine 1 is higher than 10°C).

Subsequently, during the post-cranking step (indicatively within 5-10 seconds after cranking), the electronic control unit 8 performs a further gasoline volatility recognition which contemplates detecting the time evolution of the angular speed ω of the crankshaft 4 during the post-cranking step, determining the noise r contained in the angular speed ω of the crankshaft 4 by filtering the angular speed ω itself by means of a high-pass filter, comparing the noise r contained in the angular speed ω of the crankshaft 4 against at least one predetermined recognition threshold value Tv, and recognizing the gasoline volatility according to the result of the comparison between the noise r contained in the angular speed ω of the crankshaft 4 and the predetermined recognition threshold value Tv.

Specifically, if the noise r contained in the angular speed ω of the crankshaft 4 exceeds the predetermined recognition threshold value Tv, then the real gasoline volatility value is lower than the previously described historic gasoline volatility value; on the other hand, if the noise r contained in the angular speed ω of the crankshaft 4 is lower than the predetermined recognition threshold value Tv, then the real gasoline volatility value is equal (or rather is not lower) than the previously determined historic gasoline volatility value.

According to a possible embodiment, when the noise r contained in the angular speed ω of the crankshaft 4 is higher than the predetermined recognition threshold value Tv, the difference between the real gasoline volatility value and the previously determined historic gasoline volatility value depends on the difference between the noise r contained in the angular speed ω of the crankshaft 4 and the predetermined recognition threshold value Tv. In this case, the difference between the real gasoline volatility value and the historic gasoline volatility value may be determined either by multiplying the difference between the real gasoline volatility value and the historic gasoline volatility value by a multiplying coefficient or by means of the further predetermined threshold values.

Preferably, the detection of the time evolution of the angular speed ω of the crankshaft 4 during the post-cranking step contemplates to detect the combustion time tc used by the crankshaft 4 to cover the angular measurement ranges within which the combustion of each cylinder 2 of the internal combustion engine 1 occurs and to generate a time-sorted vector of the combustion times. Each angular measurement range presents a width of approximately 108°-120° (i.e. approximately 18-20 teeth 6 of the phonic wheel 5); in this manner, the combustion times tc present an average value of the angular speed ω in a significant fraction of a revolution (approximately one third of a revolution) and are thus less affected by the uncertain measurement errors with respect to the instantaneous value of the angular speed ω measured tooth 6 by tooth 6 of the phonic wheel 5. By way of example, each angular measurement range starts approximately 10°-20° after TDC (Top Dead Centre) of a piston 3 and ends after 120°-140° after TDC; in the case of the internal combustion engine 1 shown in figure 1 and presenting four pistons 3, two angular measurement ranges, arranged one at approximately 10°-20° after TDC of the pistons 1 and 4 and the other at approximately 10°-20° after TDC of the pistons 3 and 2, are contemplated.

Preferably, the noise r contained in the angular speed ω of the crankshaft 4 is filtered by means of a low-pass filter before being compared against the predetermined recognition threshold value Tv; in this manner, possible pulse interferences which could distort the comparison between the noise r contained in the angular speed ω of the crankshaft 4 and the predetermined recognition threshold value Tv may be eliminated.

After having recognized the real gasoline volatility value, the electronic control unit 8 uses the real gasoline volatility value recognized on the basis of the result of the comparison between the noise r contained in the angular speed ω of the crankshaft 4 and the predetermined recognition threshold value Tv to adjust the enrichment of the mixture burnt in the cylinders 2. Specifically, the electronic control unit 8 increases the enrichment of the mixture burnt in the cylinders 2 if the noise r contained in the angular speed ω of the crankshaft 4 is higher than the predetermined recognition threshold value Tv (i.e. if the real gasoline volatility value is lower than the previously determined historic gasoline volatility value). According to a possible embodiment, the electronic control unit 8 may also decrease the enrichment of the mixture burnt in the cylinders 2 if the noise r contained in the angular speed ω of the crankshaft 4 is lower than the predetermined recognition threshold value Tv; subsequently, the decrease of the enrichment of the mixture must be confirmed if an excessive increase of the noise r contained in the angular speed ω of the crankshaft 4 is not observed. In other words, after having decreased the enrichment of the mixture, the electronic control unit 8 compares the noise r contained in the angular speed ω of the crankshaft 4 against the predetermined recognition threshold value Tv again and maintains the decrease of mixture enrichment only if the noise r contained in the angular speed ω of the crankshaft 4 is still lower than the predetermined recognition threshold value Tv. The electronic control unit 8 may also implement a recursive algorithm which progressively decreases the enrichment of the mixture until the noise r contained in the angular speed ω does not exceed the predetermined recognition threshold value Tv and at this point increase mixture enrichment and stops; in this manner, it is possible to constantly seek the minimum enrichment which allows a sufficiently smooth operation of the internal combustion engine 1.

In this manner, during the open loop control step of the internal combustion engine 1 (i.e. without being able to use the feedback provided by the lambda sensor to verify whether the air-gasoline mixture which is injected into the cylinders is either too lean or too rich) the reaching of the correct enrichment of the mixture is always ensured, thus avoiding possible spontaneous stopping of the engine.

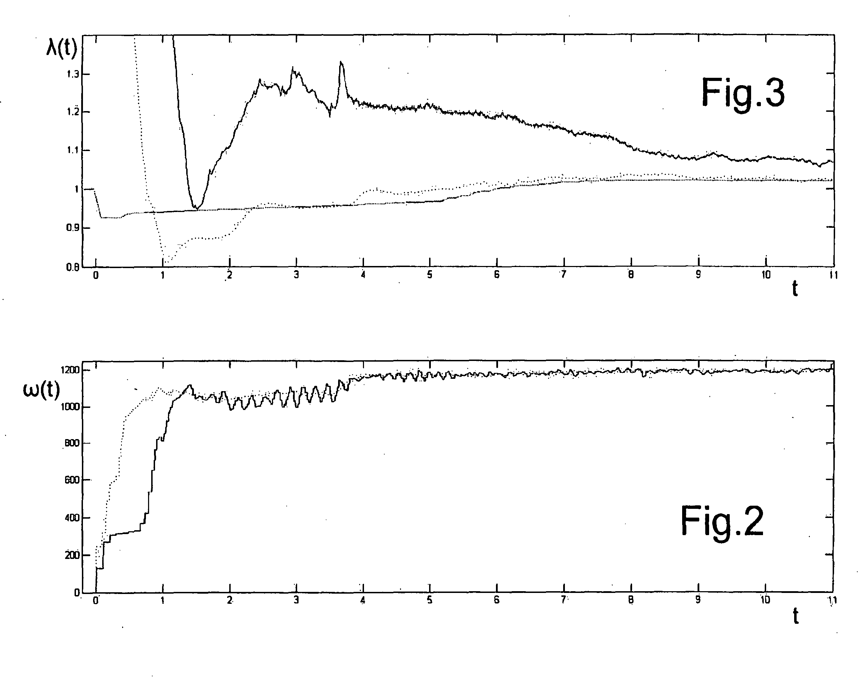

By way of example, figures 2-6 shows charts which illustrate the time evolution of some physical magnitudes during the post-cranking step measured experimentally in a real internal combustion engine.

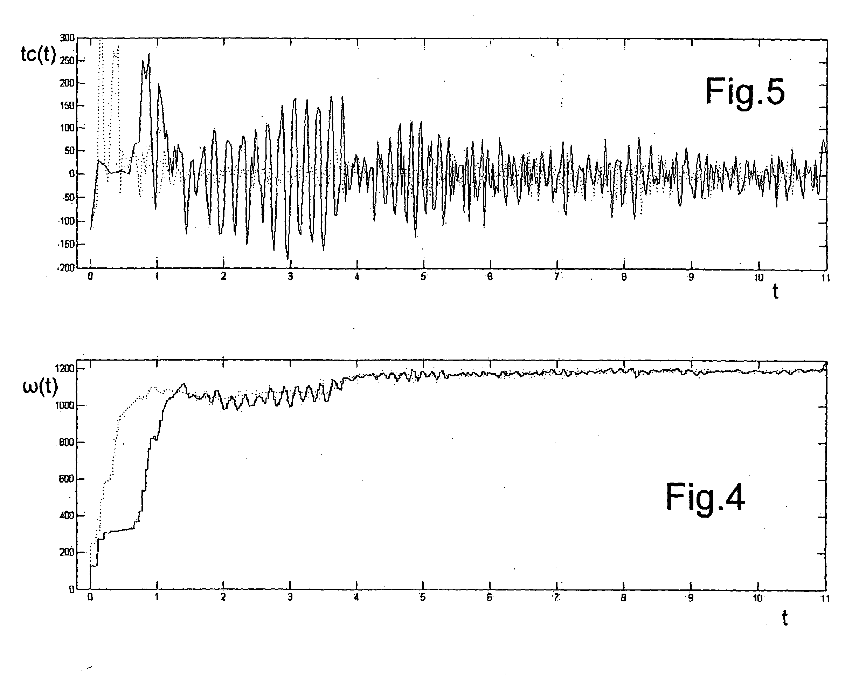

The charts shown in figures 2 and 4 illustrate the time evolution of the angular speed ω of the crankshaft 4; the abscissa shows the time measured in seconds and the ordinate shows the angular speed ω of the crankshaft 4 measured in rpm. The solid line shows the time evolution of the angular speed ω of the crankshaft 4 in case of overestimation of the gasoline volatility (i.e. when the real gasoline volatility value is lower than the previously determined historic gasoline volatility value), while the dotted line shows the time evolution of the angular speed ω of the crankshaft 4 in case of correct estimation of the gasoline volatility (i.e. when the real gasoline volatility value is equal to the previously determined historic gasoline volatility value).

The chart in figure 3 shows the time evolution of the titre λ of the mixture burnt in the cylinders 2; the abscissa shows the time measured in seconds and the ordinate shows the titre λ of the mixture burnt in the cylinders 2. The thick solid line shows the time evolution of the titre λ of the mixture burnt in the cylinders 2 in case of overestimation of the gasoline volatility (i.e. when the real gasoline volatility value is lower than the previously determined historic gasoline volatility value), while the dotted line shows the time evolution of the titre λ of the mixture burnt in the cylinders 2 in case of correct estimation of the gasoline volatility (i.e. when the real gasoline volatility value is equal to the previously determined historic gasoline volatility value). Furthermore, the thin solid line shows the time evolution of the titre target λ of the mixture burnt in the cylinders 2; it should be noted that in the case of a correct estimate of the gasoline volatility, the titre λ of the mixture burnt in the cylinders 2 follows the target well, while in the case of overestimation of the gasoline volatility, the titre λ of the mixture burnt in the cylinders 2 is considerably different from the target.

The chart in figure 5 shows the time evolution of the combustion time tc used by the crankshaft 4 to cover the angular measurement ranges in which the combustion of each cylinder 2 of the internal combustion engine 1 occurs; the abscissa shows the time measured in seconds and the ordinate shows the combustion time tc measured in milliseconds. The solid line shows the time evolution of the combustion time tc in case of overestimation of the gasoline volatility (i.e. when the real gasoline volatility value is lower than the previously determined historic gasoline volatility value), while the dotted line shows the time evolution of the combustion time tc of the crankshaft 4 in case of correct estimation of the gasoline volatility (i.e. when the real gasoline volatility value is equal to the previously determined historic gasoline volatility value).

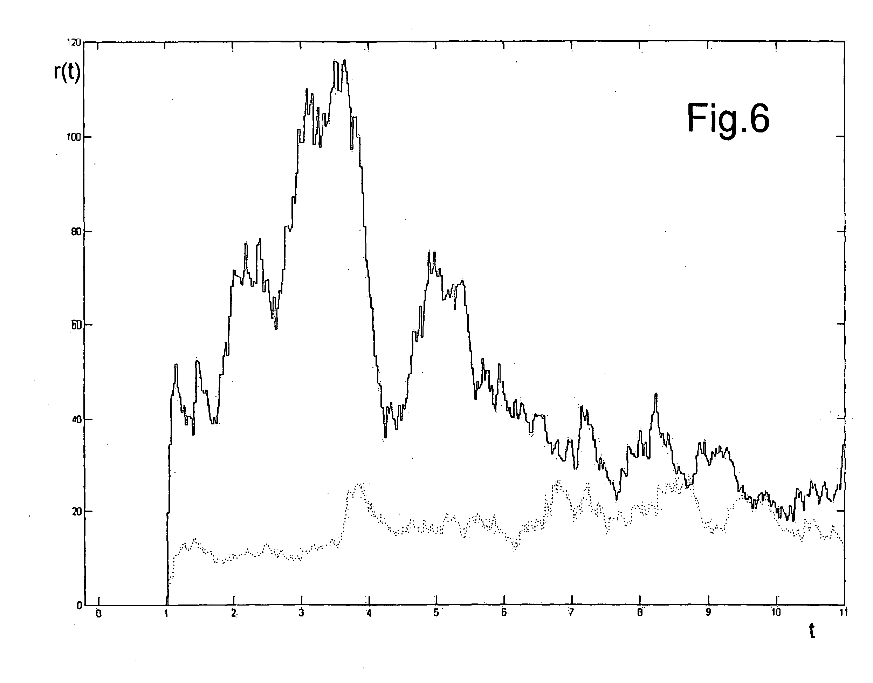

The chart in figure 6 shows the time evolution of the noise r contained in the angular speed ω; the abscissa shows the time measured in seconds and the ordinate shows the noise r contained in the angular speed ω. The solid line shows the time evolution of the noise r contained in the angular speed ω in case of overestimation of the gasoline volatility (i.e. when the real gasoline volatility value is lower than the previously determined historic gasoline volatility value), while the dotted line shows the time evolution of the noise r contained in the angular speed ω in case of correct estimation of the gasoline volatility (i.e. when the real gasoline volatility value is equal to the previously determined historic gasoline volatility value). The chart in figure 6 also shows a possible value of the predetermined recognition threshold value Tv; it should be noted that in the case of a correct estimate of the gasoline volatility, the noise r contained in the angular speed ω is maintained constantly lower than the predetermined recognition threshold value Tv, while in the case of overestimation of the gasoline volatility, the noise r contained in the angular speed ω is considerably higher than the predetermined recognition threshold Tv.

The above-described gasoline volatility recognition and mixture management enrichment strategy presents many advantages because it allows to effectively (i.e. with a high level of success) and efficiently (i.e. with a minimum employment of resources) ensure the determination of the real gasoline volatility value and thus the determination of the correct mixture enrichment. Furthermore, the above-described gasoline volatility recognition and mixture management enrichment strategy is cost-effective and simple to implement in a modern internal combustion engine, because it does not require any additional components than those normally present.

## Claims

1. A fuel volatility recognition method during the post-cranking step of an internal combustion engine (1); the method comprising the steps of:
starting the internal combustion engine (1);
adjusting the enrichment of the mixture burnt in the cylinders (2) of the internal combustion engine (1) according to a previously determined historic fuel volatility value; and
detecting the time evolution of the angular speed (ω) of a crankshaft (4) of the internal combustion engine (1) during the post-cranking step;
the recognition method is **characterized by** comprising the further steps of:
determining the noise (r) contained in the angular speed (ω) of the crankshaft (4) by filtering the angular speed (ω) itself by means of a high-pass filter;
comparing the noise (r) contained in the angular speed (ω) of the crankshaft (4) against at least one predetermined threshold value (Tv); and
recognizing the fuel volatility according to the result of the comparison between the noise (r) contained in the angular speed (ω) of the crankshaft (4) and the predetermined recognition threshold (Tv).

2. A recognition method according to claim 1, wherein, if the noise (r) contained in the angular speed (ω) of the crankshaft (4) is lower than the predetermined recognition threshold value (Tv), then the real fuel volatility value is not lower than the previously determined historic fuel volatility value.

3. A recognition method according to claim 1 or 2, wherein if the noise (r) contained in the angular speed (ω) of the crankshaft (4) is higher than the predetermined recognition threshold value (Tv) then the real fuel volatility value is lower than the previously determined historic fuel volatility value.

4. A recognition method according to claim 3, wherein the difference between the real fuel volatility value and the previously determined historic fuel volatility value depends on the difference between the noise (r) contained in the angular speed (ω) of the crankshaft (4) and the previously determined recognition threshold value (Tv).

5. A recognition method according to one of the claims from 1 to 4, wherein the step of detecting the time evolution of the angular speed (ω) of the crankshaft (4) of the internal combustion engine (1) during the post-cranking step contemplates the further steps of:
detecting the combustion time (tc) employed by the crankshaft (4) to cover the angular measurement ranges within which the combustion of each cylinder (2) of the internal combustion engine (1) occurs; and
generating a time-sorted combustion time vector.

6. A recognition method according to claim 5, wherein each angular measurement range presents a width of approximately 108°-120°.

7. A recognition method according to one of claims from 1 to 6 and comprising the further step of filtering the noise (r) contained in the angular speed (ω) of the crankshaft (4) by means of a low-pass filter before comparing against the previously determined threshold value (Tv).

8. A recognition method according to one of claims from 1 to 7 and comprising the further step of using the real fuel volatility value recognized according to the result of the comparison between the noise (r) contained in the angular speed (ω) of the crankshaft (4) and the predetermined recognition threshold (Tv) for adjusting the enrichment of the mixture burnt in the cylinders (2).

9. A recognition method according to claim 8, wherein the mixture burnt in the cylinders (2) is enriched if the noise (r) contained in the angular speed (ω) of the crankshaft (4) is higher than the predetermined recognition threshold value (Tv).

10. A recognition method according to one of claims from 1 to 9 and comprising the further step of varying the enrichment of the mixture burnt in the cylinders (2) according to the result of the comparison between the noise (r) contained in the angular speed (ω) of the crankshaft (4) and the predetermined recognition threshold (Tv).

11. A recognition method according to claim 10, wherein the mixture burnt in the cylinders (2) is enriched if the noise (r) contained in the angular speed (ω) of the crankshaft (4) is higher than the predetermined recognition threshold value (Tv).

12. A recognition method according to claim 10 or 11, wherein the enrichment of the mixture burnt in the cylinders (2) is decreased if the noise (r) contained in the angular speed (ω) of the crankshaft (4) is lower than the predetermined recognition threshold value (Tv).

13. A recognition method according to claim 12, and comprising the further steps of:
comparing the noise (r) contained in the angular speed (ω) of the crankshaft (4) against at least one predetermined threshold value (Tv) again after having decreased the enrichment of the mixture; and
maintaining the decrease in enrichment of the mixture only if the noise (r) contained in the angular speed (ω) of the crankshaft (4) is still lower than the predetermined recognition threshold value (Tv).

14. A recognition method according to claim 13, wherein a recursive algorithm which progressively decreases the mixture enrichment is used until the noise (r) contained in the angular speed (ω) no longer exceed the predetermined recognition threshold (Tv) and at this point increases the enrichment of the mixture and stops.

## Patentansprüche

1. Ein Kraftstoffvolatilitätserkennungsverfahren während des Nachstartschritts eines Verbrennungsmotors (1), wobei das Verfahren folgende Schritte aufweist:
Anlassen des Verbrennungsmotors (1); Anpassen der Anfettung des in den Zylindern (2) des Verbrennungsmotors (1) verbrannten Gemischs gemäß einem zuvor bestimmten historischen
Kraftstoffvolatilitätswert; und Erfassen der zeitlichen Entwicklung der Winkelgeschwindigkeit (ω) einer Kurbelwelle (4) des Verbrennungsmotors (1) während des Nachstartschritts;
wobei das Erkennungsverfahren **dadurch gekennzeichnet ist, dass** es folgende weitere Schritte aufweist:
Bestimmen des in der Winkelgeschwindigkeit (ω) der Kurbelwelle (4) enthaltenen Rauschens (r) durch Filtern der Winkelgeschwindigkeit (ω) selbst mittels eines Hochpassfilters;
Vergleichen des in der Winkelgeschwindigkeit (ω) der Kurbelwelle (4) enthaltenen Rauschens (r) mit mindestens einem zuvor bestimmten Schwellenwert (Tv); und
Erkennen der Kraftstoffvolatilität entsprechend dem Ergebnis des Vergleichs zwischen dem in der Winkelgeschwindigkeit (ω) der Kurbelwelle (4) enthaltenen Rauschen (r) und der zuvor bestimmten Erkennungsschwelle (Tv).

2. Erkennungsverfahren gemäß Anspruch 1, bei dem, wenn das in der Winkelgeschwindigkeit (ω) der Kurbelwelle (4) enthaltene Rauschen (r) geringer als der zuvor bestimmte Erkennungsschwellenwert (Tv) ist, der reale Kraftstoffvolatilitätswert nicht niedriger als der zuvor bestimmte historische Kraftstoffvolatilitätswert ist.

3. Erkennungsverfahren gemäß Anspruch 1 oder 2, bei dem, wenn das in der Winkelgeschwindigkeit (ω) der Kurbelwelle (4) enthaltene Rauschen (r) größer als der zuvor bestimmte Erkennungsschwellenwert (Tv) ist, der reale Kraftstoffvolatilitätswert niedriger als der zuvor bestimmte historische Kraftstoffvolatilitätswert ist.

4. Erkennungsverfahren gemäß Anspruch 3, bei dem die Differenz zwischen dem realen Kraftstoffvolatilitätswert und dem zuvor bestimmten historischen Kraftstoffvolatilitätswert von der Differenz zwischen dem in der Winkelgeschwindigkeit (ω) der Kurbelwelle (4) enthaltenen Rauschen (r) und dem zuvor bestimmten Erkennungsschwellenwert (Tv) abhängt.

5. Erkennungsverfahren gemäß einem der Ansprüche 1 bis 4, bei dem der Schritt des Erfassens der zeitlichen Entwicklung der Winkelgeschwindigkeit (ω) der Kurbelwelle (4) des Verbrennungsmotors (1) während des Nachstartschritts folgende weitere Schritte vorsieht:
Erfassen der von der Kurbelwelle (4) angewandten Verbrennungszeit (tc) zum Abdecken der Winkelmessbereiche, innerhalb deren die Verbrennung in jedem Zylinder (2) des Verbrennungsmotors (1) stattfindet; und
Generieren eines nach Zeit geordneten Verbrennungszeitvektors.

6. Erkennungsverfahren gemäß Anspruch 5, bei dem jeder Winkelmessbereich ein Breite von annähernd 108° - 120° aufweist.

7. Erkennungsverfahren gemäß einem der Ansprüche 1 bis 6, mit dem weiteren Schritt des Filterns des in der Winkelgeschwindigkeit (ω) der Kurbelwelle (4) enthaltenen Rauschens (r) mittels eines Tiefpassfilters vor dem Vergleichen mit dem zuvor bestimmten Schwellenwert (Tv).

8. Erkennungsverfahren gemäß einem der Ansprüche 1 bis 7, mit dem weiteren Schritt des Anwendens des realen Kraftstoffvolatilitätswertes, der entsprechend dem Ergebnis des Vergleichs zwischen dem in der Winkelgeschwindigkeit (ω) der Kurbelwelle (4) enthaltenen Rauschen (r) und der zuvor bestimmten Erkennungsschwelle (Tv) erkannt wurde, zum Anpassen der Anfettung des in den Zylindern (2) verbrannten Gemischs.

9. Erkennungsverfahren gemäß Anspruch 8, bei dem das in den Zylindern (2) verbrannte Gemisch angefettet wird, falls das in der Winkelgeschwindigkeit (ω) der Kurbelwelle (4) enthaltene Rauschen (r) größer als der zuvor bestimmte Erkennungsschwellenwert (Tv) ist.

10. Erkennungsverfahren gemäß einem der Ansprüche 1 bis 9, mit dem weiteren Schritt des Variierens der Anfettung des in den Zylindern (2) verbrannten Gemischs entsprechend dem Ergebnis des Vergleichs zwischen dem in der Winkelgeschwindigkeit (ω) der Kurbelwelle (4) enthaltenen Rauschen (r) und der zuvor bestimmten Erkennungsschwelle (Tv).

11. Erkennungsverfahren gemäß Anspruch 10, bei dem das in den Zylindern (2) verbrannte Gemisch angefettet wird, falls das in der Winkelgeschwindigkeit (ω) der Kurbelwelle (4) enthaltene Rauschen (r) größer als der zuvor bestimmte Erkennungsschwellenwert (Tv) ist.

12. Erkennungsverfahren gemäß Anspruch 10 oder 11, bei dem die Anfettung des in den Zylindern (2) verbrannten Gemischs gesenkt wird, falls das in der Winkelgeschwindigkeit (ω) der Kurbelwelle (4) enthaltene Rauschen (r) geringer als der zuvor bestimmte Erkennungsschwellenwert (Tv) ist.

13. Erkennungsverfahren gemäß Anspruch 12, mit folgenden weiteren Schritten:
nochmaliges Vergleichen des in der Winkelgeschwindigkeit (ω) der Kurbelwelle (4) enthaltenen Rauschens (r) mit mindestens einem zuvor bestimmten Schwellenwert (Tv), nachdem die Anfettung des Gemischs gesenkt worden ist; und
Beibehalten der Senkung der Anfettung des Gemischs nur dann, wenn das in der Winkelgeschwindigkeit (ω) der Kurbelwelle (4) enthaltene Rauschen (r) noch immer geringer als der zuvor bestimmte Erkennungsschwellenwert (Tv) ist.

14. Erkennungsverfahren gemäß Anspruch 13, bei dem ein rekursiver Algorithmus, der die Gemischanfettung schrittweise senkt, so lange angewandt wird, bis das in der Winkelgeschwindigkeit (ω) enthaltene Rauschen (r) die zuvor bestimmte Erkennungsschwelle (Tv) nicht mehr überschreitet, und an dieser Stelle die Anfettung des Gemischs erhöht und anhält.

## Revendications

1. Procédé de reconnaissance de la volatilité du carburant pendant l'étape de post-démarrage d'un moteur à combustion interne (1) ; le procédé comprenant les étapes consistant à :
démarrer le moteur à combustion interne (1) ;
régler l'enrichissement du mélange brûlé dans les pistons (2) du moteur à combustion interne (1) en fonction d'une valeur historique de volatilité du carburant préalablement déterminée ; et
détecter la variation temporelle de la vitesse angulaire (ω) d'un vilebrequin (4) du moteur à combustion interne (1) lors de l'étape de post-démarrage ;
le procédé de reconnaissance est **caractérisé en ce qu'**il comprend les étapes supplémentaires consistant à :
déterminer le bruit (r) contenu dans la vitesse angulaire (ω) du vilebrequin (4) en filtrant la vitesse angulaire (ω) elle-même à l'aide d'un filtre passe-haut ;
comparer le bruit (r) contenu dans la vitesse angulaire (ω) du vilebrequin (4) à au moins une valeur limite prédéterminée (Tv) ; et
reconnaître la volatilité du carburant en fonction du résultat de la comparaison entre le bruit (r) contenu dans la vitesse angulaire (ω) du vilebrequin (4) et la limite de reconnaissance prédéterminée (Tv).

2. Procédé de reconnaissance selon la revendication 1, dans lequel, si le bruit (r) contenu dans la vitesse angulaire (ω) du vilebrequin (4) est inférieur à la valeur limite de reconnaissance prédéterminée (Tv), la valeur réelle de volatilité du carburant n'est alors pas inférieure à la valeur historique de volatilité du carburant préalablement déterminée.

3. Procédé de reconnaissance selon la revendication 1 ou 2, dans lequel, si le bruit (r) contenu dans la vitesse angulaire (ω) du vilebrequin (4) est supérieur à la valeur limite de reconnaissance prédéterminée (Tv), la valeur réelle de volatilité du carburant est alors inférieure à la valeur historique de volatilité du carburant préalablement déterminée.

4. Procédé de reconnaissance selon la revendication 3, dans lequel la différence entre la valeur réelle de volatilité du carburant et la valeur historique de volatilité du carburant préalablement déterminée dépend de la différence entre le bruit (r) contenu dans la vitesse angulaire (ω) du vilebrequin (4) et la valeur limite de reconnaissance préalablement déterminée.

5. Procédé de reconnaissance selon l'une des revendications 1 à 4, dans lequel l'étape de détection de la variation temporelle de la vitesse angulaire (ω) du vilebrequin (4) du moteur à combustion interne (1) lors de l'étape de post-démarrage envisage les étapes supplémentaires consistant à :
détecter la durée de combustion (tc) employée par le vilebrequin (4) pour couvrir les plages de mesure angulaire au sein desquelles la combustion de chaque piston (2) du moteur à combustion interne (1) se produit ; et
générer un vecteur de durée de combustion classé selon le temps.

6. Procédé de reconnaissance selon la revendication 5, dans lequel chaque plage de mesure angulaire présente une largeur d'environ 108°-120°.

7. Procédé de reconnaissance selon l'une des revendications 1 à 6 et comprenant l'étape supplémentaire consistant à filtrer le bruit (r) contenu dans la vitesse angulaire (ω) du vilebrequin (4) à l'aide d'un filtre passe-bas avant la comparaison à la valeur limite préalablement déterminée (Tv).

8. Procédé de reconnaissance selon l'une des revendications 1 à 7 et comprenant l'étape supplémentaire consistant à utiliser la valeur réelle de volatilité du carburant reconnue selon le résultat de la comparaison entre le bruit (r) contenu dans la vitesse angulaire (ω) du vilebrequin (4) et la limite de reconnaissance prédéterminée (Tv) pour régler l'enrichissement du mélange brûlé dans les pistons (2).

9. Procédé de reconnaissance selon la revendication 8, dans lequel le mélange brûlé dans les pistons (2) est enrichi si le bruit (r) contenu dans la vitesse angulaire (ω) du vilebrequin (4) est supérieur à la valeur limite de reconnaissance prédéterminée (Tv).

10. Procédé de reconnaissance selon l'une des revendications 1 à 9 et comprenant l'étape supplémentaire consistant à faire varier l'enrichissement du mélange brûlé dans les pistons (2) en fonction du résultat de la comparaison entre le bruit (r) contenu dans la vitesse angulaire (ω) du vilebrequin (4) et la limite de reconnaissance prédéterminée (Tv).

11. Procédé de reconnaissance selon la revendication 10, dans lequel le mélange brûlé dans les pistons (2) est enrichi si le bruit (r) contenu dans la vitesse angulaire (ω) du vilebrequin (4) est supérieur à la valeur limite de reconnaissance prédéterminée (Tv).

12. Procédé de reconnaissance selon la revendication 10 ou 11, dans lequel l'enrichissement du mélange brûlé dans les pistons (2) est réduit si le bruit (r) contenu dans la vitesse angulaire (ω) du vilebrequin (4) est inférieur à la valeur limite de reconnaissance prédéterminée (Tv).

13. Procédé de reconnaissance selon la revendication 12, et comprenant les étapes supplémentaires consistant à :
comparer le bruit (r) contenu dans la vitesse angulaire (ω) du vilebrequin (4) à au moins une valeur limite prédéterminée (Tv) une nouvelle fois après avoir réduit l'enrichissement du mélange ; et
maintenir la réduction de l'enrichissement du mélange seulement si le bruit (r) contenu dans la vitesse angulaire (ω) du vilebrequin (4) est toujours inférieur à la valeur limite de reconnaissance prédéterminée (Tv).

14. Procédé de reconnaissance selon la revendication 13, dans lequel on utilise un algorithme récursif qui réduit progressivement l'enrichissement du mélange jusqu'à ce que le bruit (r) contenu dans la vitesse angulaire (ω) ne dépasse plus la limite de reconnaissance prédéterminée (Tv) puis qui augmente à ce moment l'enrichissement du mélange puis s'arrête.
